# EUROPEAN PATENT APPLICATION

(11) **EP 4 145 089 A1**
(43) Date of publication of application: **08.03.2023**
(21) Application number: 22192173.7
(22) Date of filing: 25.08.2022
(51) Int. Cl.: G01C 15/00, G01C 9/00, E04G 21/14

(54) **TILT ANALYSIS METHOD, TILT ANALYSIS PROGRAM, AND TILT ANALYSIS DEVICE**

(30) Priority: 27.08.2021 JP 2021138500
(71) Applicant: TOPCON CORPORATION, Tokyo 174-8580 (JP)
(72) Inventor: NISHI, Yoshihiro, Tokyo, 1748580 (JP); SATO, Kohei, Tokyo, 1748580 (JP); MIYAJIMA, Motohiro, Tokyo, 1748580 (JP); YAMADA, Toshio, Tokyo, 1748580 (JP); TANAKA, Takashi, Tokyo, 1748580 (JP)
(74) Representative: Schmitt-Nilson Schraud Waibel Wohlfrom Patentanwälte Partnerschaft mbB

(57) **Abstract**

A tilt analysis method of analyzing a tilt of a columnar object. The tilt analysis method includes: a reference value acquisition step for performing reference value acquisition of acquiring a reference value on the basis of a first position of a reflector of a measurement target device attached to a column foot portion of the columnar object; a column top value acquisition step for performing column top value acquisition of acquiring, in response to an execution instruction, a column top value on the basis of a second position of a/the reflector of a/the measurement target device attached to a column top of the columnar object, the execution instruction being received by an input section and inputted via a column top value acquisition instruction section displayed on a display section of a terminal device; a tilt analysis step for performing tilt analysis of generating tilt information indicating in which direction the columnar object tilts based on the reference value and the column top value; and a tilt information output step for performing tilt information output of causing the display section to display the tilt information including graphic display.

## Description

The present disclosure relates to a tilt analysis method, a tilt analysis program, and a tilt analysis device.

At a structure construction site, after column members such as steel columns have been roughly assembled (i.e., erected), erection adjustment work is performed to adjust the column members to be perpendicular to the horizontal plane. As a technique of measuring the position of a column member, for example, Patent Document 1 discloses a system for actually measuring, by using a surveying device, a retroreflective member attached to a column. A tilt amount of the column is determined based on the position of the retroreflective member measured by the surveying device.

### CITATION LIST

PATENT DOCUMENT 1: Japanese Unexamined Patent Publication No. 2019-39247

However, labor-saving is required at construction or other sites. Known measurement using transits basically requires one transit for each column. Usually, the measurement is carried out in such a way that, while observing two columns at the same time, operators such as scaffold constructors pull wires tied with two columns so as to adjust the tilts of the columns. This requires, however, a lot of staff including observers and the operators.

The present disclosure was achieved in view of these problems, and it is an object of the present disclosure to provide a tilt analysis method, a tilt analysis program, and a tilt analysis device that can facilitate labor-saving.

In order to achieve the object, a tilt analysis method according to the present disclosure is a method of analyzing a tilt of a columnar object including: a reference value acquisition section performing reference value acquisition of acquiring a reference value on the basis of a first position of a reflector of a measurement target device attached to a column foot portion of the columnar object; a column top value acquisition section performing column top value acquisition of acquiring, in response to an execution instruction, a column top value on the basis of a second position of a/the reflector of a/the measurement target device attached to a column top of the columnar object, the execution instruction being received by an input section and inputted via a column top value acquisition instruction section displayed on a display section of a terminal device; a tilt analysis section performing tilt analysis of generating tilt information indicating in which direction the columnar object tilts based on the reference value and the column top value; and a tilt information output section performing tilt information output of causing the display section to display the tilt information including graphic display.

In order to achieve the object, a tilt analysis program according to the present disclosure is a tilt analysis program for analyzing a tilt of a columnar object, the tilt analysis program causing a computer to execute: a reference value acquisition section performing reference value acquisition of acquiring a reference value on the basis of a first position of a reflector of a measurement target device attached to a column foot portion of the columnar object; a column top value acquisition section performing column top value acquisition of acquiring, in response to an execution instruction, a column top value on the basis of a second position of a/the reflector of a/the measurement target device attached to a column top of the columnar object, the execution instruction being received by an input section and inputted via a column top value acquisition instruction section displayed on a display section of a terminal device; a tilt analysis section performing tilt analysis of generating tilt information indicating in which direction the columnar object tilts based on the reference value and the column top value; and a tilt information output section performing tilt information output of causing the display section to display the tilt information including graphic display.

In order to achieve the object described above, a tilt analysis device according to the present disclosure is a tilt analysis device including a reference value acquisition section configured to acquire a reference value on the basis of a first position of a reflector of a measurement target device attached to a column foot portion of the columnar object; a column top value acquisition section configured to acquire, in response to an execution instruction, a column top value on the basis of a second position of a/the reflector of a/the measurement target device attached to a column top of the columnar object, the execution instruction being received by an input section and inputted via a column top value acquisition instruction section displayed on a display section of a terminal device; a tilt analysis section configured to generate tilt information indicating in which direction the columnar object tilts based on the reference value and the column top value; and a tilt information output section configured to cause the display section to display the tilt information including graphic display.

The tilt analysis method, the tilt analysis program, and the tilt analysis device according to the present disclosure using the sections described above can facilitate labor-saving.

### BRIEF DESCRIPTION OF THE DRAWINGS

FIG. 1 illustrates a configuration of a tilt analysis system of one embodiment of the present disclosure.
FIG. 2 illustrates an example of a measurement target device to be tracked mainly attached to a prism column.
FIG. 3 illustrates erection of a columnar object.
FIG. 4 illustrates a menu screen.
FIG. 5 illustrates an operation screen for reference measurement.
FIG. 6 illustrates an operation screen for reference settings.
FIG. 7 illustrates an operation screen for erection measurement.
FIG. 8 illustrates an operation screen for erection measurement and output operation.
FIG. 9 illustrates a form.
FIG. 10 is an enlarged view of a section P of the form illustrated in FIG. 9.
FIG. 11 is a flowchart illustrating a tilt analysis method in erection.
FIG. 12 is a schematic view illustrating columnar objects spliced together as a plurality of levels.

Embodiments of the present disclosure will be described below with reference to the drawings.

A tilt analysis system 1 includes a portable terminal device 100, a surveying device 200, and a measurement target device 300, which are used by an operator 2. The operator 2 analyzes a tilt of a columnar object 11 by using the tilt analysis system 1 with such a configuration, and works to adjust the tilt on site so that the column stands vertically.

The surveying device 200 according to one embodiment may be a surveying device employing an electro-optical distance measuring technique such as a total station (TS) and being positioned at predetermined positional coordinates, for example. The "electro-optical distance measuring technique such as TS" encompasses, in addition to the TS, a surveying device or the like employing the electro-optical distance measuring method without a telescope, which is capable of performing measurement as accurate as the TS equipped with an automatic tracking function. The surveying device 200 is capable of automatically tracking a reflector 310 of the measurement target device 300 as a target, thereby to determine a predetermined position of a survey target (e.g., a columnar object 11 in this embodiment) provided with the reflector 310.

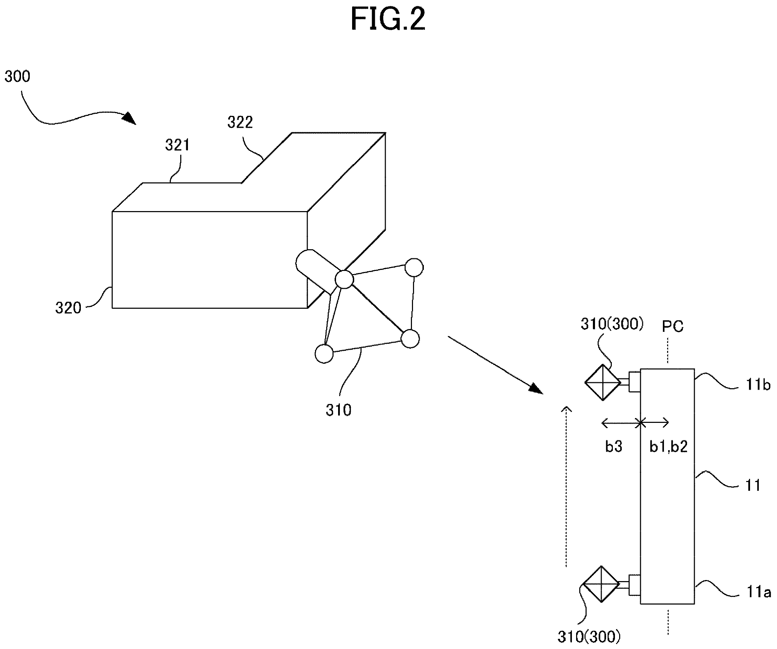

The measurement target device 300 includes the reflector 310, which is an optical element that reflects light radiated from the surveying device 200 back to the surveying device 200. FIG. 2 shows the measurement target device 300 to be attached to a prism columnar object 11. The measurement target device 300 includes an attachment portion 320 to be attached to the columnar object 11 and the reflector 310 that reflects surveying light radiated from the surveying device 200 to the surveying device 200. The optical element serving as the reflector 310 is a so-called retroreflective prism. In a surveying industry and a construction-related industry, the measurement target device 300 of this type may be referred to as a "prism in some cases. The details of the measurement target device 300 will be described later.

Note that the surveying device 200 and the measurement target device 300 are physically independent components, but configured to achieve the surveying function in cooperation with each other. Therefore, the measurement target device 300 may also be interpreted as being integrally included in the surveying device 200.

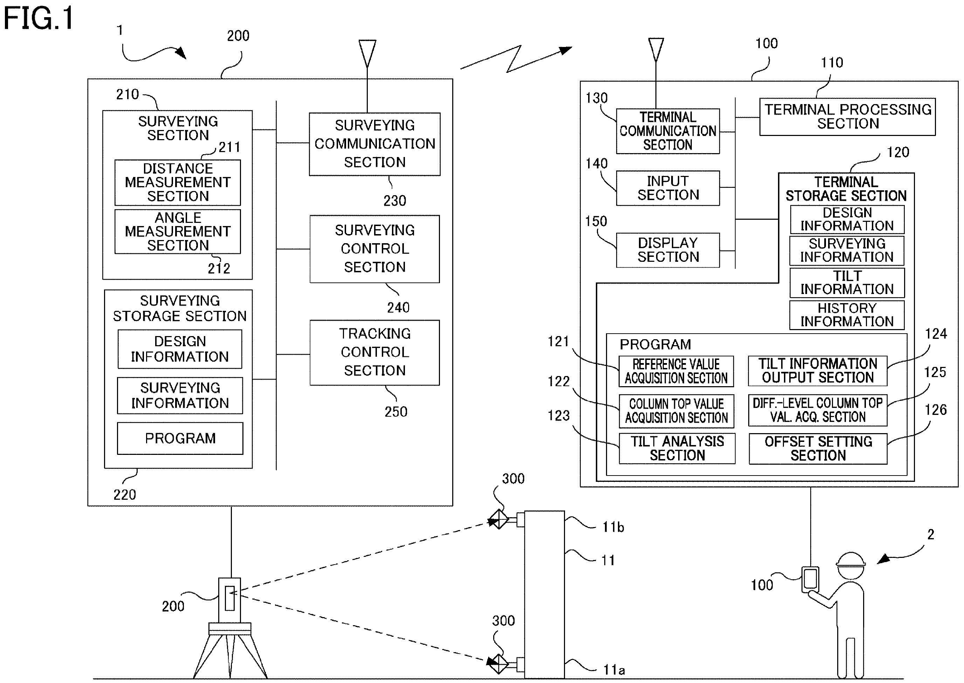

Referring back to FIG. 1, the surveying device 200 and the terminal device 100 will be described. The surveying device 200 includes a horizontal rotation driving section (not illustrated) that is supported by a tripod and is rotatably drivable in the horizontal direction. The surveying device 200 may further include a vertical rotation driving section (not illustrated) that is vertically rotatable above the horizontal rotation driving section, and a telescope section that is rotatably driven by the vertical rotation driving section. Although not illustrated, the surveying device 200 includes horizontal and vertical angle detection sections as components of angle measurement section 212. The horizontal angle detection section detects the horizontal rotation angle, whereas the vertical angle detection section detects the vertical rotation angle. The use of these horizontal and vertical angle detection sections allows measurement of the horizontal and vertical angles of the collimation direction, respectively.

The surveying device 200 further includes an electro-optical distance meter, for example, as a distance measurement section 211 that measures a slope distance to the measurement target device 300. For the sake of simplicity, these angle and distance measurement sections 212 and 211 are collectively referred to as a "surveying section 210."

The surveying device 200 further includes a surveying storage section 220, a surveying communication section 230, a surveying control section 240, and a tracking control section 250.

The surveying storage section 220 may store, in advance, various programs for the surveying, tracking, or other controls; or geographical information (e.g., the altitude), design information, or other information to be used at a construction site. Moreover, the surveying storage section 220 may store already-surveyed positional coordinates.

The surveying communication section 230 is communicative with external devices such as the terminal device 100 and may be, for example, a wireless communication device.

The surveying control section 240 has a function to control the surveying by the surveying device 200. More specifically, the surveying control section 240 automatically or manually collimates the measurement target device 300 via a telescope section. The surveying control section 240 determines the horizontal angle, the vertical angle, and the slope distance between the surveying device 200 and the measurement target device 300 via the angle measurement section (i.e., the horizontal and vertical orientation detectors) 212 and the distance measurement section 211 described above. Here, the retroreflective prism as an example of the reflector 310 of the measurement target device 300 is distanced apart from the attachment portion 320 for attachment to the columnar object 11 as illustrated in FIG. 2. The distance between the retroreflective prism and the attachment portion 320 (i.e., a distance b1 from the center PC to a flat portion (side) or a distance b2 from the center PC to a corner) as well as a distance b3 between the retroreflective prism and a surface of the columnar object 11 are known. The surveying control section 240 thus calculates out the position of the measurement target device 300 as surveying results by correcting the horizontal angle, vertical angle, and slope distance detected by the angle and distance measurement sections 212 and 211. The positions may be calculated out as relative coordinates or absolute coordinates. In the case of calculating the positions as the relative coordinates, the position of the columnar object 11 as the object to be surveyed is calculated out as a relative value viewed from the location of the surveying device 200.

The tracking control section 250 performs tracking of the measurement target device 300 by radiating tracking light to the measurement target device 300 and controlling drive of the horizontal and vertical rotation drive sections (not illustrated) in such a way that the surveying device 200 continuously receives the tracking light reflected from the reflector 310 of the measurement target device 300.

The measurement target device 300 will be described more in detail. The attachment portion 320 of the measurement target device 300 in FIG. 2 is illustrated as an L-shaped magnetic block as an example, and has, on the inner side of the corner of the L-shape, a first flat portion 321 and a second flat portion 322 for abutting on surfaces of the columnar object 11. These first and second flat portions 321 and 322 are arranged perpendicularly to each other. If a columnar object 11 is a prism column, that is, a column with a rectangular cross section and right-angled faces, the first and second flat portions 321 and 322 fit with a corner of the column regardless of the size of the columnar object 11. Even if the columnar object 11 is one in another shape, such as an H-section steel, the columnar object 11 has corners to which the first and second flat portions 321 and 322 correspond.

In most of the cases, the columnar objects 11 are magnetic, such as steel frames. Therefore, such an attachment portion 320 that is made of a magnetic material, which exerts an attractive force on such a columnar object 11 not only facilitates the attachment and detachment of the attachment portion 320 but also allows stable surveying by such firm attachment without allowing any movement while attached to the columnar object 11. The use of such a measurement target device 300 facilitates the surveying of the position of the corner of the column, especially. The surveying of the center position of the column will be described later. If the attachment portion 320 is attached to the columnar object 11 by another attachment method, the attachment portion 320 may be made of a material other than such a magnetic material. For example, if the columnar object is made of wood, the attachment portion 320 may be configured for attachment suitable for wood, rather than being made of a magnetic material.

Referring back to FIG. 1, examples of the terminal device 100 include a smartphone, a feature phone, a tablet, a handheld computer device (e.g., a personal digital assistant (PDA)), and a wearable terminal (e.g., a glasses-type device, a watch-type device, or a virtual reality (VR) terminal integrated with a head-mounted display). As an alternative, the terminal device 100 may be a terminal such as a portable laptop computer. A general-purpose terminal is, with application software installed, usable as a portable display terminal of this embodiment. Such a terminal device 100 includes a display section (an output section) 150, and is easily carriable at a work site. The terminal device 100 makes it possible to easily check information outputted to the display section 150 hands-free or with one hand. The terminal device 100 may also include an internal power supply such as a battery and may thus be operatable for a certain period without requiring an external power supply.

The terminal device 100 includes a terminal communication section 130, a terminal storage section 120, a terminal processing section 110, an input section 140, and the display section (output section) 150.

The terminal processing section 110 can execute a program or programs (not illustrated) stored in the terminal storage section 120 to execute a function and/or a method implemented by codes or commands or instructions included in the program or programs. Examples of the terminal processing section 110 include a central processing section (CPU), a microprocessor section (MPU), a graphics processing section (GPU), a microprocessor, a processor core, a multiprocessor, an application specific integrated circuit (ASIC), and a fieldprogrammable gate array (FPGA), and the like. The terminal processing section 110 may include a logic circuit or a dedicated circuit formed in an integrated circuit, for example, to execute the processes described in the embodiments. Although not shown, the terminal device 100 may include a main storage section that temporarily stores a program retrieved from the terminal storage section 120 and provides the terminal processing section 110 with a workspace to run the program.

The terminal communication section 130 is communicative with the surveying communication section 230 of the surveying device 200. The terminal communication section 130 can receive information such as the surveying results obtained by surveying the measurement target device 300 by surveying device 200, the positional information calculated out by the surveying control section 240, and other information. The calculation of the positional information based on the surveying results may be carried out by the surveying device 200 or by the terminal device 100. The communications may be established wired or wirelessly.

The input section 140 receives inputs from the operator 2, who is a user, and sends the information related to the inputs to the terminal processing section 110. The input section 140 is any one or a combination of any types of devices with an input function. Example configurations of the input section 140 include, in addition to hardware-type input devices such as buttons, software-type input devices such as objects displayed on an output section such as a touch screen, and audio input devices such as a remote controller or a microphone.

The display section 150 may be a device capable of displaying visual information in the form of an image or characters on a screen. Examples of the display section 150 include a flat display such as a liquid crystal display or an organic light-emitting diode (OLED) display, a curved display, a folding screen on a foldable terminal, a head-mounted display, and a device displayable through projection on an object using a small projector. If an audio output section is further provided, the audio output section may be an audio output device such as a speaker. The display section 150 may be a combination of a display section and an audio output section.

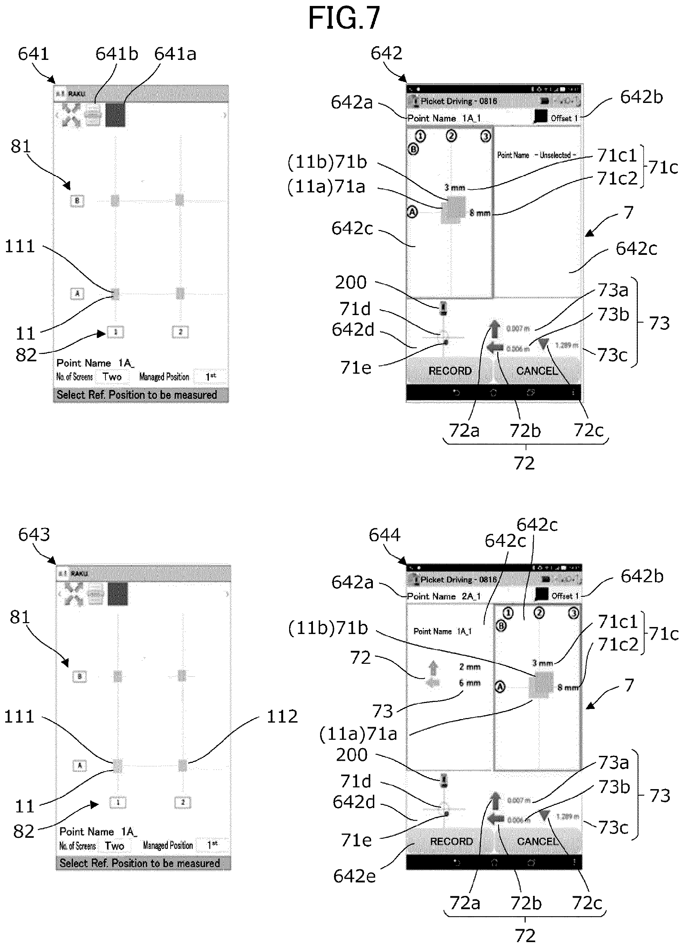

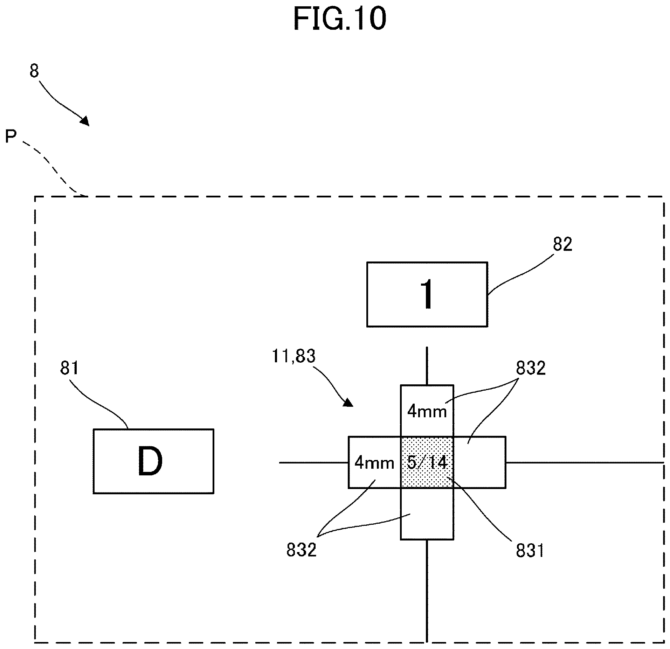

The terminal storage section 120 is configured to store various necessary programs or data. For example, the terminal storage section 120 may store design information, surveying information, tilt information (tilt information 7 and 83 shown in FIGS. 7 and 10), and history information thereof. The surveying information may include the surveying information received via the terminal communication section 130 and the position information calculated based on the surveying information. The terminal storage section 120 can store various parameters, for example, parameters and calculation formulas for calculating the center PC of the columnar object 11 from the position of the reflector 310. The terminal storage section 120 may be one of various storage media such as a hard disk drive (HDD), a solid-state drive (SSD), and a flash memory.

The design information includes blueprints or ground information (e.g., the altitude) necessary for construction work. Examples of the construction work include construction of structures, such as buildings, roads, railroads, tunnels, bridges, ditches, waterways, and rivers, that require columns. The blueprints may include blueprints of buildings; linear data; point data; the positions, coordinates, and altitudes of the points and line segments; and the dimensions, such as the height or widths, of columnar objects. Note that the embodiment of the present disclosure is advantageous in analyzing the tilt of each columnar object 11 without the need of using any design information, thereby eliminating or reducing input work of the design information that is inputted in advance.

The tilt information to be stored in the terminal storage section 120 may be the position, being which one of levels, tilt direction, and tilt amount of the columnar object 11 in question, the analysis time (e.g., the analysis dates and time) of the tilt analysis, and may be associated with information on the user of the system. For example, the terminal storage section 120 may be such that the tilt information obtained at a certain analysis time is retrievable and storable in a predetermined format, such as a form (e.g., an inspection form) 8 (see also FIG. 10), for checking the current states or the states after work.

The terminal storage section 120 stores, as application software programs, a reference value acquisition section 121, a column top value acquisition section 122, a tilt analysis section 123, a tilt information output section 124, a different-level column top value acquisition section 125, and an offset setting section 126, which are configured to perform their functions. The programs include a tilt analysis program.

The reference value acquisition section 121 functions to acquire, as a reference value indicating the position of the center PC of the column foot portion 11a of the columnar object 11, a position offset (corrected) from a first position by a predetermined offset amount. The first position is a position of the reflector 310 of the measurement target device 300 attached to the column foot portion 11a of the columnar object 11 (see e.g., FIG. 2), which is measured out by the surveying device 200.

The column top value acquisition section 122 functions to acquire, as a column top value indicating the position of the center PC of the column top 11b of the columnar object 11, a position offset (corrected) from a second position by a predetermined offset amount. The second position is a position of the reflector 310 of the measurement target device 300 attached to the column top 11b of the columnar object 11, which is measured by the surveying device 200.

The tilt analysis section 123 functions to generate tilt information including a tilt direction based on the reference value acquired by the reference value acquisition section 121 and the column top value acquired by the column top value acquisition section 122. The tilt direction indicates in which direction the columnar object 11 tilts.

The tilt analysis section 123 also functions to generate tilt information including a tilt direction based on the reference value and a different-level column top value acquired by the different-level column top value acquisition section 125. The tilt direction indicates in which direction the different-level columnar object tilts.

The tilt information output section 124 functions to display, on the display section 150, the tilt information generated by the tilt analysis section 123.

The different-level column top value acquisition section 125 functions to acquire, as a different-level column top value, the column top value of a columnar object 11 spliced to the columnar object 11 in question as another level right above the columnar object 11 in question, where the columnar object 11 in question is the columnar object 11 for which the reference value acquisition section 121 has acquired a reference value. The different-level column top value is acquired as follows. The measurement target device 300 is attached to the column top 11b of the columnar object 11, which is another level spliced above the columnar object 11 in question, for which the reference value has been acquired. The position of the reflector 310 of this measurement target device 300 is surveyed using the surveying device 200.

Each of the terminal device 100 and the surveying device 200 includes a computer for executing various programs. The programs may be stored in a computer-readable storage medium.

Now, a main screen configuration displayed on the display section 150 upon execution of a tilt analysis program will be described. Note that the information on each image may be stored in the terminal storage section 120, or information displayed may be such that part of the information is acquired from an external device as required and displayed on the screen of the display section 150 under the control of the terminal processing section 110.

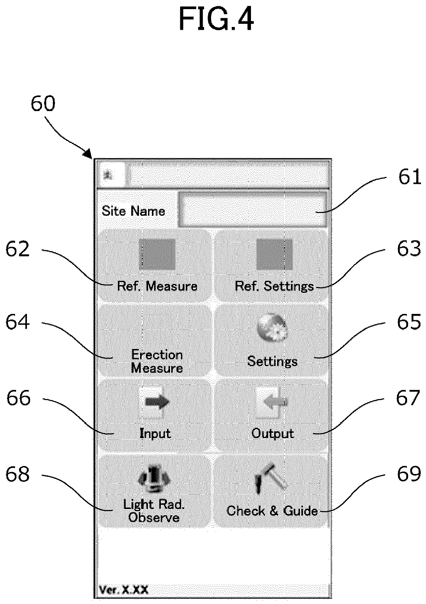

A menu screen 60 illustrated in FIG. 4 includes menu items of site name 61, reference measurement 62, reference setting 63, erection measurement 64, settings 65, input 66, output 67, light radiation observation 68, and check & guide 69. the site name 61 is site name identification information (e.g., a name made up of characters) set in accordance with information such as design information, surveying information, and history information. Once the site name 61 is selected, the display section 150 displays a selection screen of the site name identification information stored in advance in the terminal storage section 120, or a registration reception screen of a new site name (details are not illustrated). Once any one of the site name identification information is selected, or a new site name is registered and site name identification information is given, the site name identification information is displayed in the box of site name 61 of the menu screen 60 as the currently selected site name. For example, if one of the already stored site name identification information is selected, information such as the design information, the surveying information, and the history information associated with the selected site name identification information is read out.

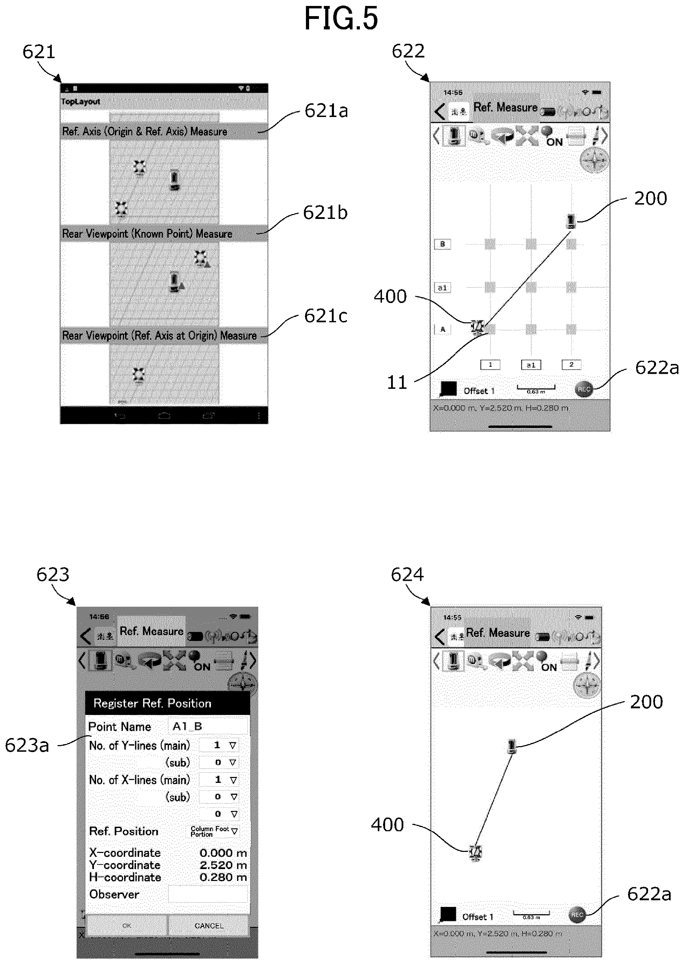

The reference measurement 62 is a menu item for measuring (surveying) the position of a device point as the reference position. If the reference measurement 62 is selected when reference position is set in the reference settings 63 (which will be described later), the display of the display section 150 shifts to a selection screen 621 for selecting how to set the position of the device point, as illustrated in FIG. 5. The selection screen 621 includes, as setting (measurement) items for setting the position of the device point, reference axis measurement 621a, rear viewpoint (known point) measurement 621b, and rear viewpoint (reference axis at origin) measurement 621c. For example, once rear viewpoint (known point) measurement 621b is selected, the display shifts to a reference position selection screen 622. The reference position selection screen 622 displays thereon the surveying device 200, a plurality of columnar objects 11 arranged in accordance with the design information, and the measurement target devices 300 attached to some of the columnar objects 11.

If REC 622a is selected while any of the measurement target devices 300 is selected on the reference position selection screen 622, the surveying device 200 surveys the position of a reference point 400 equipped with a reflector, which is the same or similar to the reflector 310, and performs coordinates registration of the reference point 400 and settings of the station device. The terminal device 100 receives the measurement result from the surveying device 200 and causes the display section 150 to display a measurement result screen 623 including a measurement result 623a on the reference point 400. The measurement result 623a includes a point name, Y- and X-lines, a reference position, and coordinates of the columnar object 11 at which the reference point 400 is located. If the OK button (for accepting) of the measurement result 623a is selected, the first position of the columnar object 11 corresponding to the measurement target device 300 selected on the reference position selection screen 622 is registered in association with the reference value.

If the reference measurement 62 is selected when the reference position is not set in the reference settings 63 (which will be described later), the display shifts to a setting screen (not shown) for the Y- and X-lines (including main and sub-lines), and thereafter shifts to a reference measurement selection screen 624 as illustrated in FIG. 5. The reference measurement selection screen 624 displays the reference point 400 thereon. The terminal device 100 receives the measurement result from the surveying device 200 and causes the display section 150 to display a measurement result screen (corresponding to the measurement result screen 623) including the measurement result. If OK button for the measurement result is selected, the measured position of the reference point 400 is registered.

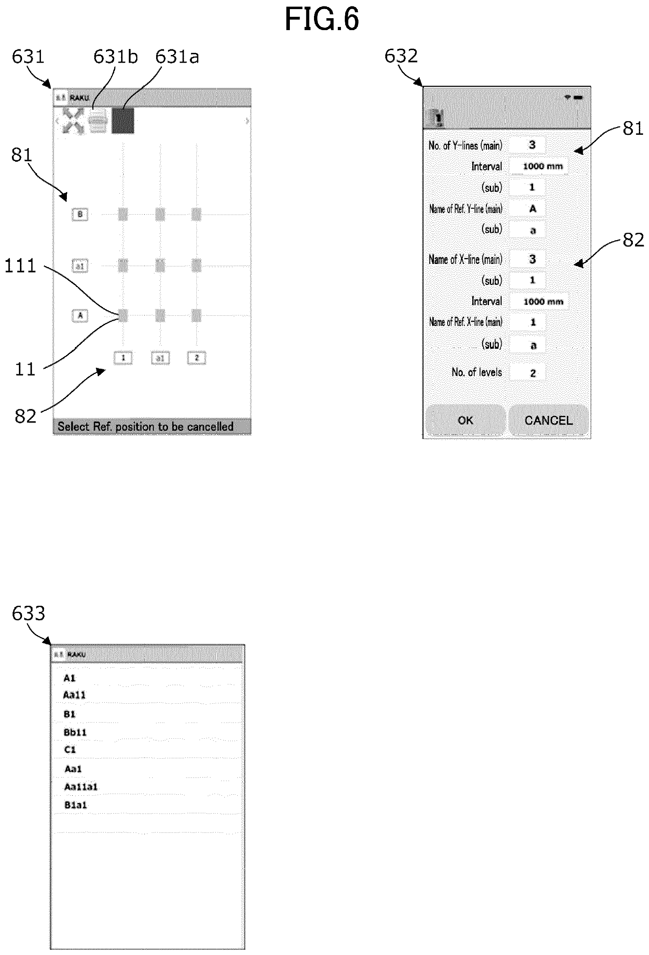

The reference setting 63 is a menu item for setting the columnar object 11 serving as a reference of a tilt analysis. If the reference setting 63 is selected, the display section 150 displays a reference selection screen 631 as illustrated in FIG. 6. The reference selection screen 631 includes a plurality of columnar objects 11 arranged in accordance with lines 81 and 82. If reference position settings 631a are selected, the display shifts to a reference position setting screen 632. On the reference position setting screen 632, information on the lines 81 and 82 in which a reference columnar object 11 is located can be inputted. The input items include the number of levels, the Y- and X-lines 81 and 82 (each including the main lines, the interval, and sub-lines), and reference Y- and X-lines (each including a main line and a sub-line).

If a reference position list 631b is selected in the reference settings 63, the display shifts to a reference position list screen 633. The reference position list screen 633 displays a list of the lines 81 and 82 in which the columnar object 11 selected as the reference position is located.

The erection measurement 64 is a menu item for measuring the position of a column top 11b to analyze the tilt of a columnar object 11. If the erection measurement 64 is selected, the display section 150 displays a selection screen (not illustrated) the same or similar to the selection screen 621 in FIG. 5 to cause a user to select one of the reference axis measurement 621a, the rear viewpoint (known point) measurement 621b, and the rear viewpoint (reference axis at origin) measurement 621c. For example, if the rear viewpoint measurement is selected, the display section 150 displays a measurement reference position selection screen 641 as illustrated in FIG. 7. The measurement reference position selection screen 641 displays thereon a plurality of columnar objects 11 arranged in the lines 81 and 82. The measurement reference position selection screen 641 includes reference position settings 641a with the same or similar function to the reference position settings 631a described above with reference to FIG. 6, and a reference position list 641b with the same or similar function to the reference position list 631b.

For example, if a columnar object 111 is selected on the measurement reference position selection screen 641, the display shifts to a tilt display screen 642. The tilt display screen 642 displays the point name 642a, the measurement target device information settings 642b, the measurement screens 642c, and the tilt information 7 (including a first figure 71a, a second figure 71b, a figure 71e of the column foot portion 11a (a picket point) of a columnar object 11, a figure 71d of a column top 11b (a surveying point) of the columnar object 11, direction information 72, and difference information 73).

Displayed in the box of point name 642a is the line in which the currently selected columnar object 11 is located. The measurement target device information settings 642b is an icon that causes the display to shift to an information setting screen for the measurement target device 300. If the measurement target device information settings 642b is selected, information such as an attachment position, at which the measurement target device 300 is attached to the columnar object 11, is set on a setting screen 647 which will be described later.

The measurement screens 642c highlighted here displays information regarding the lines (point name) "2A" as the tilt information 7, where the lines (point name) "2A" is information indicating the lines (point name) including the first figure 71a representing the column foot portion 11a at the position with the reference value and the second figure 71b representing the column top 11b at the position with the column top value. The measurement screen 642c also displays lines of the first figure 71a and the second figure 71b. The second figure 71b is positioned to superimpose on the first figure 71a. Displayed near the second figure 71b is difference information 71c indicating a difference between the column top value indicating the position of the second figure 71b and the reference value indicating the position of the first figure 71a. The difference information 71c indicates, for example, displacement amounts in numerical values in millimeters.

Here, the second figure 71b is displayed as deviating upward (in a first direction) and rightward (in a second direction) on the screen with respect to the first figure serving as the reference. This indicates that the columnar object 11 tilts with the column top 11b located with upward (e.g., in the reference axis direction on site) and rightward (e.g., a direction at a horizontal angle of 90° from the reference axis direction on site) deviations from the column foot portion 11a. The difference information 71c described above includes a first component 71c1 corresponding to the deviation upward on the screen (in the first direction) and a second component 71c2 corresponding to the deviation rightward on the screen (in the second direction perpendicular to the first direction), which represent the display position of the second figure 71b. In this example, "3 mm" is displayed as the first component 71c1 for the upward direction with respect to the second figure 71b, while "8 mm" is displayed as the second component 71c2 for the rightward direction with respect to the second figure 71b.

As described above, the tilt information 7 displayed on the measurement screen 642c is represented by the position of the second figure 71b with respect to the first figure 71a, or represented by the display position of the difference information 71c with respect to the second figure 71b, thereby including direction information indicating the direction from the column top 11b to the column foot portion 11a.

A measurement screen 642d below the measurement screen 642c may display the tilt information 7 on a columnar object 11 different from that on the measurement screen 642c. The measurement screen 642d displays information including the figure 71e (the first figure) representing the position with the reference value of the column foot portion 11a in the form of a position of an intersection, the figure 71d (the second figure) representing the column top value of the column top 11b in the form of a point, the direction information 72 indicating directions from the column top 11b to the column foot portion 11a, and the difference information 73 corresponding to the direction information 72. The figure 71d is superimposed on the figure 71e with offset amounts. The position of the figure 71d with respect to the figure 71e represents difference information indicating the direction from the column top value to the reference value.

Displayed on the right of the figures 71d and 71e are the direction information 72 and the difference information 73. The direction information 72 includes first to third component figures (first to third figures (which may be icons)) 72a to 72c indicating the direction from the column top 11b toward the column foot portion 11a on the screen. The first component figure 72a represents a component corresponding to the upward direction (in the first direction) in the form of an arrow. The second component figure 72b represents a component corresponding to the left (in the second direction) in the form of an arrow. The third component figure 72c represents the height from the column top value to the reference value in the form of a triangle. The difference information 73 includes a first component 73a corresponding to the first component figure 72a, a second component 73b corresponding to the second component figure 72b, and a third component 73c corresponding to the third component figure 72c. In this example, the first component 73a is "0.007 m", the second component 73b is "0.006 m", and the third component 73c is "1.289 m."

The measurement screen 642d below the measurement screen 642c may display the tilt information 7 on the same columnar object 11 displayed on the measurement screen 642c, depending on a display mode.

Once a measurement screen 642c not yet set is selected, the screen display of the display section 150 shifts to a measurement reference position selection screen 643. Since the columnar object 111 is already selected on the measurement reference position selection screen 643, the color of the displayed figure is changed to make it apparent that the selected one is a columnar object 11. For example, in the case where the columnar object 11 of lines "2A" are selected, the display shifts to a tilt display screen 644.

The tilt display screen 644 displays in such a way that the tilt information 7 on a columnar object 11 in the selected lines "2A" (a point name 652a "1A_1") is displayed on the measurement screen 642c. The tilt information 7 on the measurement screen 642c is displayed in the same or similar manner to that on the measurement screen 642c of the tilt display screen 642.

On the measurement screen 642d, the tilt information 7 on a columnar object 11 of other lines "1A" (in the point name of "1A_1") is represented by the direction information 72 using arrows and the difference information 73.

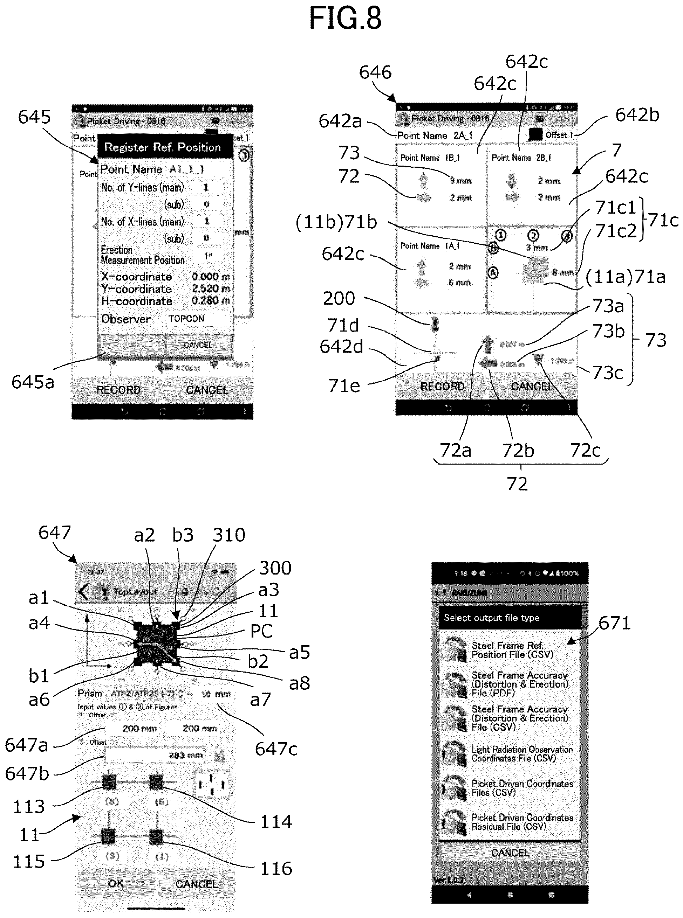

If RECORD 642e is selected, for example, the position of the column top 11b of the currently selected columnar object 11 is measured, and the measurement result is displayed on a registration screen 645 as illustrated in FIG. 8. If an OK button 645a for accepting is selected, the measurement result including the column top value is registered.

A measurement reference position selection screen 646 is an example including four measurement screens 642c related to the columnar objects 11 on different lines 81 and 82.

The setting screen 647 displays candidates for the attachment position of a measurement target device 300 with respect to a columnar object 11 for the setting distances b1 to b3. The distances b1 and b2 are acquired from the center PC of the columnar object 11 to outer surfaces (including corners) of the columnar object 11. The distance (dimension) b3 is acquired from the center of the reflector 310 of the measurement target device 300 to the columnar object 11. The setting screen 647 displays a cross section of a columnar object 11 in a quadrangular prism shape. An attachable position of the measurement target device 300 illustrated on the setting screen 647 is selectable from eight positions of positions a1, a3, a6, and a8 at the corners of the columnar object 11 and positions a2, a4, a5 and a7 on the flat portions (i.e., sides).

An input item 647a is for inputting the distance b1, which is an offset amount from the center PC of the columnar object 11 to a flat portion, which is an outer surface. If the columnar object 11 is a rectangular prism, different values may be set in two orthogonal directions. An input item 647b is for inputting the distance b2, which is an offset amount from the center PC to a corner on an outer surface. An input item 647c is for inputting the distance b3 from an outer surface (e.g., a flat portion or a corner) of the columnar object 11, onto which the measurement target device 300 can be attached, to the reflector 310 of the measurement target device 300.

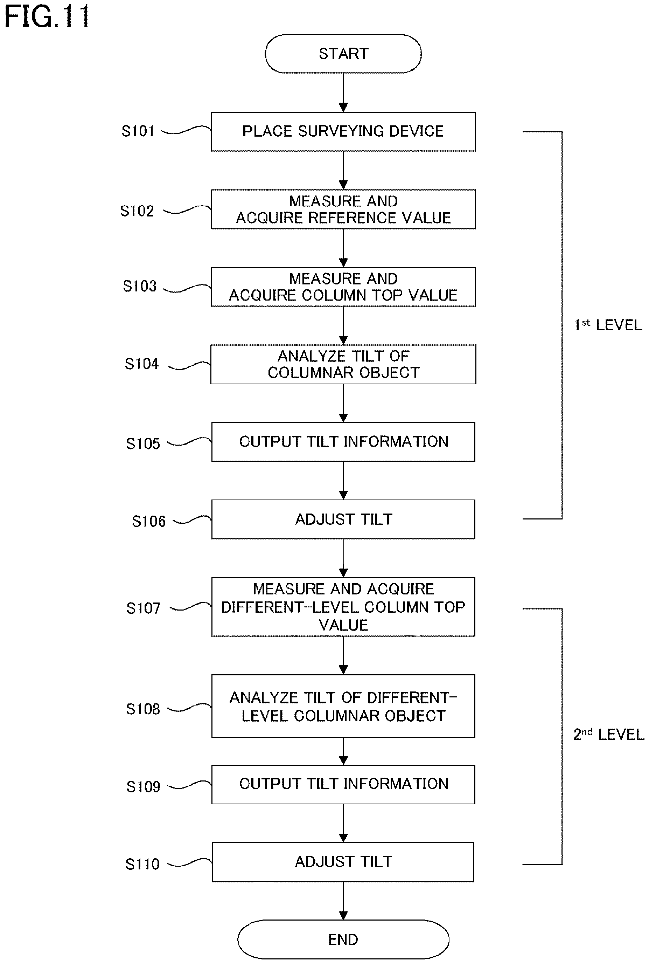

Set on the setting screen 647 is the columnar object 11 (including a plurality of columnar objects 113 to 116 in this embodiment) and the attachment position at which the measurement target device 300 is attached to the columnar object 11. The attachment position of the measurement target device 300 can be set using numbers "(1)" to "(8)", for example. In the columnar object 11 illustrated in FIG. 8, positions a1, a2, a3, a5, a8, a7, a6, and a4 set in the clockwise direction from the position a1 of the upper left corner correspond to "(1)", "(2)", "(3)", "(5)", "(8)", "(7)", "(6)", and "(4)", respectively. For example, if the columnar object 113 is placed at the position a8 at the corner as the position of the measurement target device 300, "(8)" is set as the setting value. Once the input section 140 receives a selection instruction to select an attachment position from a plurality of candidates, the offset setting section 126 calculates and sets an offset amount of the reflector 310 with respect to the position of the center PC of the columnar object 11 from the distance b3 and the distance b1 or b2. For example, in a flowchart of FIG. 11, which will be described later, offset settings are executed as advance settings for an erection work.

Once the output 67 is selected on the menu screen 60 of FIG. 4, the display of the display section 150 shifts to an output file selection screen 671 of FIG. 8. Selectable on the output file selection screen 671 is one of a steel frame reference position file (CSV), a steel frame accuracy (distortion and erection) file (PDF), a steel frame accuracy (distortion and erection) file (CSV), a light radiation observation coordinates file (CSV), a picket driven coordinates file (CSV), and a picket driven coordinates residual file (CSV) as exemplary data output formats.

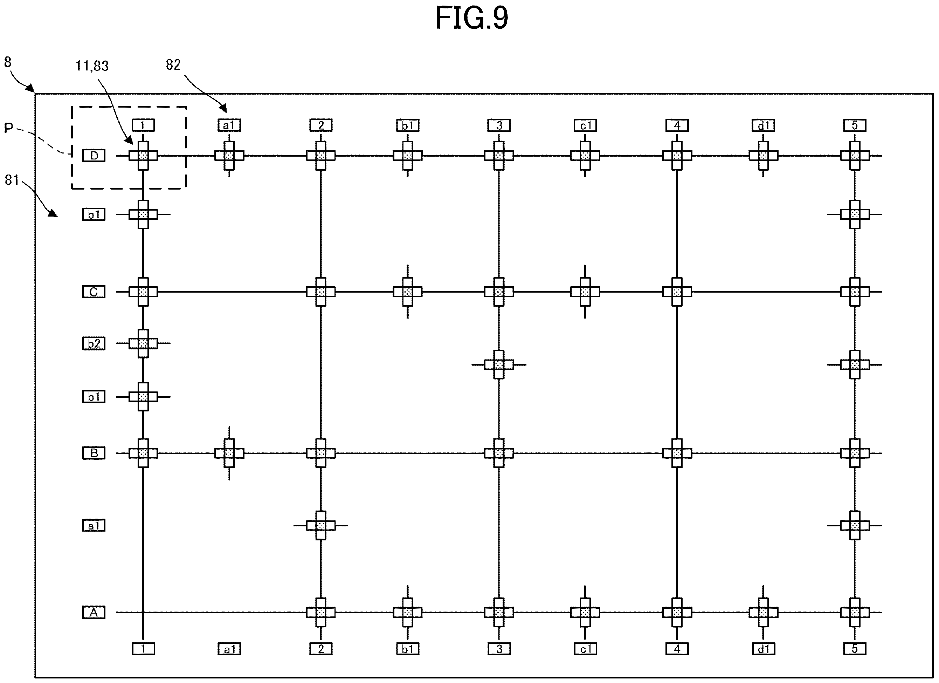

FIG. 9 illustrates the form 8. The form 8 is data outputted if the steel frame accuracy (distortion and erection) file (PDF) is selected on the output file selection screen 671 of FIG. 8. The form 8 may be prepared for each level.

The form 8 includes lines 81 in the row direction (i.e., the Y-direction), line 82 in the column direction, and the tilt information 83 on the columnar objects 11 arranged in accordance with the lines 81 and 82. In the form 8, main lines in the row direction may be represented by uppercase alphabets. For example, "A", "B", "C", and "D" are assigned in order from the bottom. The sub-lines in the row direction may be represented by combinations of lowercase alphabets and numbers. For example, "b1" and "b2" are interposed between "B" and "C". On the other hands, main lines in the column direction may be represented by numbers. For example, "1", "2", "3", "4", and "5" are assigned in order from the left. The sub-lines in the column direction may be represented by combinations of lowercase alphabets and numbers. For example, "a1" is interposed between "1" and "2".

The columnar objects 11 on the form 8 are arranged in accordance with the positions in the lines 81 and 82, including the tilt information 83. FIG. 10 is an enlarged schematic view of a section P including enlarged one of the columnar objects 11 on the form 8. The tilt information 83 includes five quadrangular figures connected in a cross shape. A center box (a third figure) 831 representing a columnar object 11 displays a surveying date. Out of upper, lower, left, and right boxes 832, those with displacements from the column foot portion 11a as viewed along the plane (i.e., along the paper in FIG. 11) of the column top 11b display the respective displacement amounts of the column top 11b. The Box 831 is arranged in an array according to the lines 81 and 82.

A columnar object 11 "D1" illustrated in FIG. 10 has a column top 11b (see also FIG. 1) tilting leftward by 4 mm and upward by 4 mm from the column foot portion 11a. In short, the tilt information 83 includes direction information indicating the directions from the column top 11b to the column foot portion 11a, and difference information indicating the difference between the column top value representing the location of the column top 11b and the reference value representing the location of the column foot portion 11a along the plane. Moreover, the center box 831 may include visual identification information colored in accordance to the degree of the difference (the magnitude of the displacement amount) of the difference information. The display may be configured such that the degree of the displacement amount of a columnar object 11 is easily visible according to visual identification information associated with the columnar object 11.

By displaying such tilt information 83 for each columnar object 11, a viewer can easily grasp the degree and direction of tilt of the columnar object 11 by viewing the form 8. Static tilt information 83 illustrated on the form 8 may be used by the operator 2 for temporary check, or as an inspection form after an erection work. With use of the coordinates surveyed by the surveying device 200 on site, the tilt information may also be prepared without using any design information.

FIG. 11 is a processing flowchart including steps according to a tilt analysis method and a tilt analysis program using the tilt analysis system 1, which analyze the tilt of a columnar object 11.

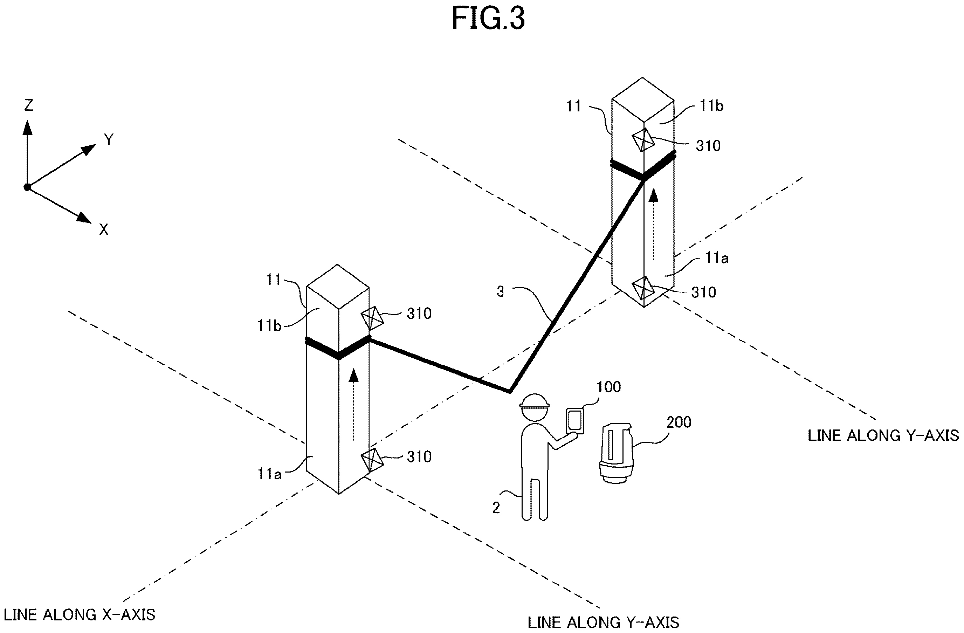

In step S101, the surveying device 200 is placed at a certain position, selected as appropriate, at a construction site so as to set a device point. For example, the terminal processing section 110 may cause the display section 150 to display the menu screen 60 illustrated in FIG. 4, so that the reference measurement 62 can be selected to set the device point. FIG. 3 is a view for explaining erection of a columnar object 11 according to an embodiment of the present disclosure. The surveying device 200 is placed at a position selected as appropriate, at a construction site. These placement and setting works can be performed alone by the operator 2. In this embodiment, the coordinate axes may be set in any directions.

The operator 2 may operate, as a user, the input section 140 of the terminal device 100 to log in the system. Accordingly, user information may be associated later with the tilt information 7, 83 when being recorded.

In step S102, surveying of first points is performed by the operator 2, in which measurement target devices 300 are placed at the respective column foot portions 11a of the columnar objects 11, and by using the surveying device 200, surveying light is irradiated to the measurement target devices 300 so as to determine the first points. The reference value acquisition section 121 acquires the first points as reference values. The reference values may be acquired from the screens 631 to 633 in FIG. 6 described above.

The reference value is applicable to the tilt analysis of not only the first level but also the higher levels such as second, third, and N-th level, where N is a natural number. Hereinafter, an example will be described where two columnar objects 11 are surveyed at the same time to analyze the tilts. Alternatively, the tilts of the columnar objects may be analyzed one by one, or the tilts of three or more columnar objects may be analyzed at the same time.

In step S103, surveying of second points is performed by the operator 2 in which the measurement target devices 300 are detached from the column foot portions 11a of the columnar objects 11, and the measurement target devices 300 are attached to the column tops 11b, and the second points are determined by using the surveying device 200. Note that it is not necessarily the same measurement target device 300 attached to the column foot portion 11a is used for the column top 11b, but the same measurement target device 300 may be used for the column top 11b. The acquisition of the column top values and the tilt analysis are performed mainly on the screens 641 to 647 as illustrated in FIGS. 7 and 8.

Step S103 is a column top value acquisition step, in which in response to receiving, at the input section 140, an execution instruction to a column top value acquisition instruction section 645a (e.g., the OK button 645a on an erection position registration screen 645) displayed on the display section 150 of the terminal device 100, the column top value acquisition section 122 acquires the column top value from the second position of the reflector 310 of the measurement target device 300 attached to the column top 11b of the columnar object 11. The column top value may be acquired on the screens 641 to 644 as illustrated in FIG. 7.

In step S104, the tilt analysis section 123 generates the tilt information 7, 83 on the basis of the reference value acquired in step S102 and the column top value acquired in step S103, the tilt information 7, 83 including tilt direction information indicating in which direction the columnar object 11 tilts. The tilt analysis section 123 can calculate how much the column top value deviates from the reference value, and includes the deviation amount in the tilt information.

The tilt analysis section 123 calculates, as the tilt information, the tilt direction and the difference information (i.e., the tilt amount) (e.g., the direction information 72 and the difference information 73 illustrated in FIG. 8 or other figures) on the basis of the XY position coordinates of the reference and column top values. For example, the tilt analysis section 123 separately calculates out differences for the X- and Y-components in the direction information. According to another method, the X- and Y-components of the coordinates are integrally calculated out as a vector. In the example of FIG. 10, if the reference value is assumed to be (0, 0), the tilt direction and the tilt amount are indicated by the vector of (0, 0) to (+4 mm, +4 mm). This method clarifies in which direction (i.e., opposite to the tilt direction) and how much the columnar object should be directly pulled with a wire rope or a piano wire at the time of erection adjustment work. This facilitates erection adjustment work with a wire rope or other tools.

The tilt analysis section 123 may also be configured to calculate the height of a columnar object 11 on the basis of differences between the H coordinate values (coordinate values in the height direction) of the reference and column top values.

In step S105, the tilt information output section 124 displays the tilt information 7, 83 on the display section 150 of the terminal device 100. In step S105 as form output, the tilt information output section 124 outputs a form 8 though the display section 150 or any other suitable device (e.g., a display section of an external device or an output device such as a printer). The form 8 includes the lines 81 and 82 in which a columnar object 11 is located, a surveying date for the tilt information 7, 83 on the columnar object 11, the direction information, and the difference information in association with each other.

The tilt information 7, 83 may be used for checking the state of the tilt while performing an erection work by the operator 2, typically. The tilt information 7, 83 may be treated differently for dynamic and static tilt information, where the dynamic tilt information is one acquired by the terminal device 100 analyzing the state of the tilt in real time and output to the display section 150 in real time while communicating with the surveying device 200, whereas the static tilt information (e.g., the tilt information 83 indicated by the above-described form 8) is one that statically indicates the state of the tilt at a predetermined analysis time and is recorded as static data, so that a third party can check the state of the tilt after work, for example. More specifically, the dynamic tilt information may be such that the position of the measurement target device 300 attached is continuously tracked and surveyed, so that, if the position of the measurement target device 300 is changed, the positional change is continuously outputted to the display section 150. Accordingly, the tilt direction and the tilt amount are, as the dynamic tilt information, sequentially displayed in real time so that the operator 2 performs the erection work referring to the tilt direction and the tilt amount dynamically displayed.

The static tilt information may be stored as history information in the terminal storage section 120. In this case, this configuration makes it possible for the operator 2 to store or view the static tilt information of an analysis time as desired, by operating, for example, the input section 140 (e.g., a touch panel display) of the terminal device 100.

Each tilt information 7, 83 includes, for example, information (e.g., center line information) on lines 81 and 82 each being a straight line indicating the arrangement of a plurality of columnar objects 11, the information being generated by the tilt analysis section 123 on the basis of the reference value. The display section 150 displays the position of each columnar object 11 and the lines 81 and 82 passing through the columnar object 11. The position of each columnar object 11 is displayed as the XY coordinates referring to, as a reference value, an actual measurement value acquired for each columnar object 11 by surveying. This makes it possible to perform erection or other work on the basis of the tilt information 7, even without acquiring positional information on a columnar object 11 as designed.

In the case where the tilt information 7, 83 is used as the dynamic tilt information, the tilt information 7, 83 displayed on the display section 150 or any other suitable section can provide the operator 2, who corrects the posture of a columnar object 11, with a specific reference as to which direction and how much the posture is to be corrected. The static tilt information outputted as the form 8 for a certain level can be a reference for the erection work on the other levels above the certain level. In addition, this information may also be used as a post-erection inspection form to indicate the progress or final stage of the erection. Storing the history of the form 8 as such makes it possible to perform a comparison with the history information, thereby making it easier to grasp states such as the displacement amount of a columnar object 11 caused during the progress of the construction work or due to an environmental change or other factors.

In step S106, the postures of the columnar objects 11 are corrected, referring to the states of the tilts as grasped by the operator 2 referring to the tilt information 7, 83. For example, as illustrated in FIG. 3, the postures of the columnar objects 11 can be corrected by and pulling a wire 3 wound around both the columnar objects 11. In such a correcting work, if the dynamic tilt information is used, the positions of the measurement target devices 300 are updated in real time. This makes it possible for the operator 2 to correct the postures efficiently, while receiving the feedback on a result of actually pulling the wire, according to the tilt information 7, 83 displayed on the display section 150. Note that this correction work may be performed on a column-by-column basis or may be divided into multiple times such as correcting in the X-direction and in the Y-direction, separately. Therefore, Steps S104, S105, and S106 may be performed at substantially the same time and repeated.

After completion of a series of such work, the erection work for one level ends and the process shifts to the next level. Note that a building may be divided into a plurality of segments in the horizontal direction and a plurality of levels in the vertical direction. For example, the first and second levels often roughly correspond to the first and second floors of the finished building.

In step S107, a second level different from the first level is erected. The different-level column top value acquisition section 125 functions to acquire, as a different-level column top value, the column top value of a columnar object 11 spliced to the columnar object 11 in question as another level right above the columnar object 11 in question, where the columnar object 11 in question is the columnar object 11 for which the reference value is acquired. The different-level column top value is acquired by surveying, by using the surveying device 200, the position of the measurement target device 300 attached to the column top 11b of the columnar object 11.

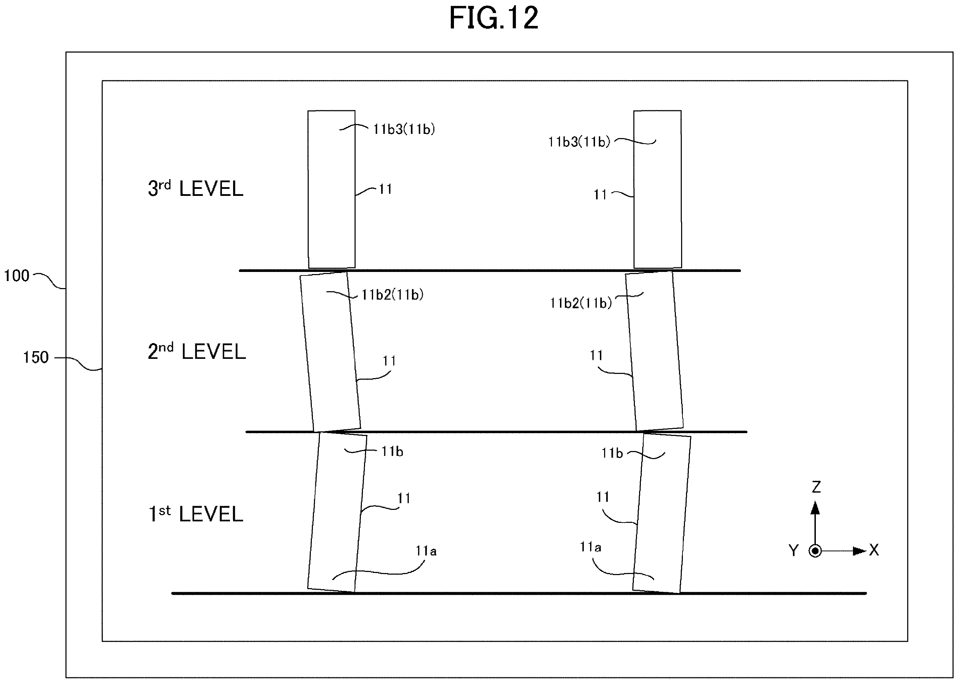

FIG. 12 is an example image to be displayed on the display section 150 of the terminal device 100. FIG. 12 illustrates the conditions of erecting columnar objects 11 illustrating columnar objects spliced together as a plurality of levels. The processing or operations in steps S107 to S110 can be performed in the same or similar manner to those in steps S103 to S106. While FIG. 12 is a flowchart for the first and second levels, the same flow as for the second level is repeated for the third and subsequent level.

Moreover, the tilt information 7, 83 on a columnar object 11 as another level may be generated in such a way that, for example, assuming that the columnar object 11 as another level in question is a columnar object 11 as the second level, the tilt analysis section 123 generates the tilt information 7, 83 on the columnar object 11 as the another level on the basis of a reference value indicating the position of the column foot portion 11a of a columnar object 11 as the first level and a column top value indicating the column top 11b2 of the columnar object 11 as the second level, which is the another level in question.

As described above, the tilt analysis system, the tilt analysis method, and the tilt analysis program according to the embodiment of the present disclosure includes: a reference value acquisition section 121 performing reference value acquisition of acquiring a reference value on the basis of a first position of a reflector 310 of a measurement target device 300 attached to a column foot portion 11a of the columnar object 11; a column top value acquisition section 122 performing column top value acquisition of acquiring, in response to an execution instruction, a column top value on the basis of a second position of a/the reflector 310 of a/the measurement target device 300 attached to a column top 11b of the columnar object 11, the execution instruction being received by an input section 140 and inputted via a column top value acquisition instruction section 645a displayed on a display section 150 of a terminal device 100; a tilt analysis section 123 performing tilt analysis of generating tilt information 7, 83 indicating in which direction the columnar object 11 tilts based on the reference value and the column top value; and a tilt information output section 124 performing tilt information output of causing the display section 150 to display the tilt information 7, (83) including graphic display (the first figure 71a, the second figure 71b, the figures 71d and 71e, the direction information 72, figures 831 and 832, etc.), thereby making it possible to facilitate labor-saving in erection adjustment work of the columnar object 11 and the like operation.

The embodiments of the present disclosure have been described above, but the aspects of the present disclosure are not limited to the embodiment. For example, the columnar object 11 may also be a non-prism column, for example, a cylindrical column. The columnar object 11 is not limited to the cylindrical column, and may be a columnar object, such as an elliptic cylindrical column, with a non-rectangular cross section.

Moreover, the surveying device 200 may be another type of device (e.g., a layout navigator) such as a surveying device without the display section and the telescope section (e.g., centripetal telescope) in the configuration according to the embodiment illustrated in FIG. 1 and other figures, and being configured to be controllable by the terminal device 100 in a remote location.

Even though the embodiment has described an example in which the terminal device 100 functions as the tilt analysis device including the reference value acquisition section 121, the column top value acquisition section 122, the tilt analysis section 123, the tilt information output section 124, and other sections, but alternatively, the tilt analysis device may be constituted as a system including a plurality of devices among which the functional sections (the reference value acquisition section 121, the column top value acquisition section 122, the tilt analysis section 123, the tilt information output section 124, and other sections) are distributed, or the tilt analysis device may be modified from the terminal device 100.

### DESCRIPTION OF REFERENCE CHARACTERS

- 1: Tilt Analysis System
- 2: Operator
- 3: Wire
- 7: Tilt Information
- 8: Form
- 11, 111 to 116: Columnar Objects
- 11a: Column Foot Portion
- 11b, 11b2, 11b3: Column Top
- 60: Menu Screen
- 61: Site Name
- 62: Reference Measurement
- 63: Reference Settings
- 64: Erection Measurement
- 65: Settings
- 66: Input
- 67: Output
- 68: Light Radiation Observation
- 69: Check and Guide
- 71a: First Figure
- 71b: Second Figure
- 71c: Difference Information
- 71c1: First Component
- 71c2: Second Component
- 71d: Figure
- 71e: Figure
- 72: Direction Information
- 72a: First Component Figure
- 72b: Second Component Figure
- 72c: Third Component Figure
- 73: Difference Information
- 73a: First Component
- 73b: Second Component
- 73c: Third Component
- 83: Tilt Information
- 100: Terminal Device
- 110: Terminal Processing Section
- 120: Terminal Storage Section
- 121: Reference Value Acquisition Section
- 122: Column Top Value Acquisition Section
- 123: Tilt Analysis Section
- 124: Tilt Information Output Section
- 125: Different-Level Column Top Value Acquisition Section
- 126: Offset Setting Section
- 130: Terminal Communication Section
- 140: Input Section
- 150: Display Section
- 200: Surveying Device
- 210: Surveying Section
- 211: Distance Measurement Section
- 212: Angle Measurement Section
- 220: Surveying Storage Section
- 230: Surveying Communication Section
- 240: Surveying Control Section
- 250: Tracking Control Section
- 300: Measurement Target Device
- 310: Reflector
- 320: Attachment Portion
- 321: First Flat Portion
- 322: Second Flat Portion
- 400: Reference Point
- 621: Selection Screen
- 621a: Reference Axis Measurement
- 621b: Rear Viewpoint (Known Point) Measurement
- 621c: Rear Viewpoint (Reference Axis at Origin) Measurement
- 622: Reference Position Selection Screen
- 622a: REC
- 623: Measurement Result Screen
- 623a: Measurement Result
- 624: Reference Measurement Selection Screen
- 631: Reference Selection Screen
- 631a: Reference Position Settings
- 631b: Reference Position List
- 632: Reference Position Setting Screen
- 633: Reference Position List Screen
- 641: Measurement Reference Position Selection Screen
- 641a: Reference Position Settings
- 641b: Reference Position List
- 642: Tilt Display Screen
- 642a: Point Name
- 642b: Measurement Target Device Information Settings
- 642c: Measurement Screen
- 642d: Measurement Screen
- 642e: Record
- 643: Measurement Reference Position Selection Screen
- 644: Tilt Display Screen
- 645: Erection Position Registration Screen
- 645: Registration Screen
- 645a: OK Button
- 646: Measurement Reference Position Selection Screen
- 647: Setting Screen
- 647a to 647c: Input Item
- 652a: Point Name
- 671: Output File Selection Screen
- 831: Box
- 832: Box
- PC: Center
- b1 to b3: Distance

## Claims

1. A tilt analysis method of analyzing a tilt of a columnar object (11), the tilt analysis method comprising:
a reference value acquisition section (121) performing reference value acquisition (S102) of acquiring a reference value on the basis of a first position of a reflector (310) of a measurement target device (300) attached to a column foot portion (11a) of the columnar object (11);
a column top value acquisition section (122) performing column top value acquisition (S103) of acquiring, in response to an execution instruction, a column top value on the basis of a second position of a/the reflector (310) of a/the measurement target device (300) attached to a column top (11b) of the columnar object (11), the execution instruction being received by an input section (140) and inputted via a column top value acquisition instruction section (645a) displayed on a display section (150) of a terminal device (100);
a tilt analysis section (123) performing tilt analysis (S104) of generating tilt information (7, 83) indicating in which direction the columnar object (11) tilts based on the reference value and the column top value; and
a tilt information output section (124) performing tilt information output (S105) of causing the display section (150) to display the tilt information (7, 83) including graphic display.

2. The tilt analysis method of claim 1, wherein
the tilt information (7, 83) includes direction information (72) indicating a direction from the column top (11b) to the column foot portion (11a), and difference information (73) indicating a difference between the column top value and the reference value.

3. The tilt analysis method of claim 2, wherein
the direction information (72) includes a first direction and a second direction perpendicular to the first direction, and
the difference information (73) includes a first component related to the first direction and a second component related to the second direction.

4. The tilt analysis method of claim 2 or 3, wherein
the tilt information (7, 83) includes a first figure (71a) representing the column foot portion (11a) with the reference value and a second figure (71b) representing the column top (11b) with the column top value, and
the second figure (71b) is superimposed on the first figure (71a).

5. The tilt analysis method of any one of claims 2 to 4, further comprising:
the display section (150) displaying the columnar object (11) and a candidate or candidates for an attachment position at which the device (300) is attached to the columnar object (11); and
an offset setting section (126) performing offset setting of setting, in response to a selection instruction, an offset amount of the reflector (310) from a center position of the columnar object (11), the selection instruction being received by the input section (140) and indicating which one of the candidate or candidates is selected as the attachment position, wherein
the reference value is acquired as a position that is offset from the first position by the offset amount, and
the column top value is acquired as a position that is offset from the second position by the offset amount.

6. The tilt analysis method of any one of claims 2 to 5, wherein:
the tilt information output (S105) performed by the tilt information output section (124) includes form output (S105) of outputting a form (8) including a third figure (831) representing the columnar object (11), lines in which the columnar object (11) is located, a surveying date for the tilt information (7, 83) on the columnar object (11), the direction information, and the difference information (73) in association with each other.

7. The tilt analysis method of claim 6, wherein
the form (8) is such that visual identification information is positioned in association with the columnar object (11), the visual identification information indicating how much the difference indicated by the difference information (73) is.

8. The tilt analysis method of claim 6 or 7, wherein
the form (8) is prepared for each level of a plurality of the columnar objects (11) spliced together, and
the third figure (831) is displayed in an arrangement according to the lines.

9. A tilt analysis program for analyzing a tilt of a columnar object (11), the tilt analysis program comprising instructions which, when the program is executed by a computer, cause the computer to execute:
a reference value acquisition section (121) performing reference value acquisition (S102) of acquiring a reference value on the basis of a first position of a reflector (310) of a measurement target device (300) attached to a column foot portion (11a) of the columnar object (11);
a column top value acquisition section (122) performing column top value acquisition (S103) of acquiring, in response to an execution instruction, a column top value on the basis of a second position of a/the reflector (310) of a/the measurement target device (300) attached to a column top (11b) of the columnar object (11), the execution instruction being received by an input section (140) and inputted via a column top value acquisition instruction section (645a) displayed on a display section (150) of a terminal device (100);
a tilt analysis section (123) performing tilt analysis (S104) of generating tilt information (7, 83) indicating in which direction the columnar object (11) tilts based on the reference value and the column top value; and
a tilt information output section (124) performing tilt information output (S105) of causing the display section (150) to display the tilt information (7, 83) including graphic display.

10. A tilt analysis device, comprising:
a reference value acquisition section (121) configured to acquire a reference value on the basis of a first position of a reflector (310) of a measurement target device (300) attached to a column foot portion (11a) of the columnar object (11);
a column top value acquisition section (122) configured to acquire, in response to an execution instruction, a column top value on the basis of a second position of a/the reflector (310) of a/the measurement target device (300) attached to a column top (11b) of the columnar object (11), the execution instruction being received by an input section (140) and inputted via a column top value acquisition instruction section (645a) displayed on a display section (150) of a terminal device (100);
a tilt analysis section (123) configured to generate tilt information (7, 83) indicating in which direction the columnar object (11) tilts based on the reference value and the column top value; and
a tilt information output section (124) configured to cause the display section (150) to display the tilt information (7, 83) including graphic display.
